# EUROPEAN PATENT SPECIFICATION

(11) **EP 0 405 945 B1**
(45) Date of publication and mention of the grant of the patent: **13.04.1994**
(21) Application number: 90307033.2
(22) Date of filing: 27.06.1990
(51) Int. Cl.: B60T 11/16, B62L 3/02

(54) **Apparatus for adjusting operating lever ratio of master cylinder for vehicle**
Gerät zum Einstellen der Hebelübersetzung an einem Hauptzylinder für ein Fahrzeug
Dispositif pour le réglage du rapport du levier d'un maître-cylindre pour véhicule

(30) Priority: 27.06.1989 JP 165037/89
(43) Date of publication of application: 02.01.1991
(73) Proprietor: NISSIN KOGYO KABUSHIKI KAISHA, Ueda-Shi, Nagano-Ken 386 (JP)
(72) Inventor: Kasahara, Hiroshi, Nagano-ken (JP); Yanagisawa, Masahiro, Nagano-ken (JP); Matsuno, Isao, Nagano-ken (JP)
(74) Representative: Leale, Robin George

(56) References cited:
- EP-A- 0 173 513
- US-A- 4 840 082

## Description

The present invention relates to an apparatus for adjusting the operating lever ratio of a master cylinder for vehicles, which is attached to a bar type steering handle. More particularly, this invention relates to an adjusting apparatus which can alter the operational feeling of the operating lever.

A master cylinder for vehicles, which can change the operational feeling of the operating lever, is disclosed in Published Examined Japanese Utility Model No. 62-1834, for example. This master cylinder has an operating lever pivoted on its lever bracket and an adjusting pivot block provided rotatable at an urging arm of the operating lever; the pivot block serves to change the thrust amount of a push rod. The adjusting pivot block has a plurality of recesses with different depths formed therein. The push rod has one end abutting against the rear end of the piston of the master cylinder and the other end engaged with one of the recesses. Therefore, the stroke required for the free end of the piston to block the relief port of the master cylinder, i.e., the invalid stroke, can be varied by selecting one of the recesses, causing the push rod to engage with the selected recess, then changing the thrust amount of the push rod. This permits a rider to alter the amount of movement of the operating lever until the invalid stroke is released in order to select the desired operational feeling.

Although the above master cylinder permits selection among different operational feelings by changing the invalid stroke, it is not possible to alter the operating feeling caused by the reactive force of the piston which is generated upon generation of the liquid pressure to be transmitted to the operating lever.

Published Examined Japanese Utility Model No. 62-30870 and Published Unexamined Japanese Patent Application No. 63-305085 disclose a master cylinder for vehicles, which adjusts the gap between the grip portion of the operating lever and the steering handle in accordance with the size of the rider's hands. The operating lever is designed so that the gap between the grip portion and the steering handle can be adjusted by a combination of a plurality of members. Like the previously-described master cylinder, however, this type cannot permit alteration of the operating feeling caused by the reactive force of the piston which is produced upon generation of the liquid pressure to be transmitted to the operating lever.

Thus from JP-A-63 305 085 there is known an operating lever ratio adjusting apparatus for a master cylinder for vehicles including a master cylinder attached to a bar type steering handle, a lever bracket provided at said master cylinder, an operating lever pivotable on said lever bracket by a support shaft, a push rod having a first end acting on a rear end of a piston in said master cylinder and a second end pushed by an urging arm of said operating lever, the urging arm having a plurality of holding portions, for holding the second end of the push rod.

Accordingly, it is an object of the present invention to permit alteration of the operational feeling made by the reactive force of the piston produced when the liquid pressure to be transmitted to the operating lever is generated.

Thus, the invention is characterised in that said holding portions are arranged such that the position of the second end of the push rod is variable in a direction which crosses the axis of the push rod, thereby varying the distance between the support shaft and the second end of the push rod.

Therefore, it is possible to change the lever ratio, which is expressed by the ratio of the distance between the support shaft and the holding portions to the distance between the support shaft and the grip portion of the operating lever. As the reactive force of the piston at the time the liquid pressure to be transmitted to the grip portion of the operating lever is generated, is changed, therefore, it is possible to alter the operational feeling as desired by the rider.

Some embodiments of the invention will now be described by way of example and with reference to the accompanying drawings, in which:-

Figs. 1 through 6 illustrate a first embodiment of a master cylinder for vehicles according to the present invention of which Fig. 1 is a plan view with part of an operating lever omitted, Fig. 2 is a partly cross-sectional bottom view, Fig. 3 is an exploded perspective view, Fig. 4 is a cross-sectional plan view of a lever ratio adjusting mechanism, Fig. 5 is a cross-sectional side view of the same, and Fig. 6 is a plan view for explaining the lever ratio.

Figs. 7 and 8 illustrate a second embodiment of a master cylinder for vehicles according to the present invention of which Fig. 7 is a partly cross-sectional plan view of relevant portions, and Fig. 8 is a cross-sectional view along the line 8-8 in Fig. 7.

Figs. 9 and 10 illustrate a third embodiment of a master cylinder for vehicles according to the present invention of which Fig. 9 is a plan view of relevant portions and Fig. 10 is a cross-sectional view along the line 10-10 in Fig. 9.

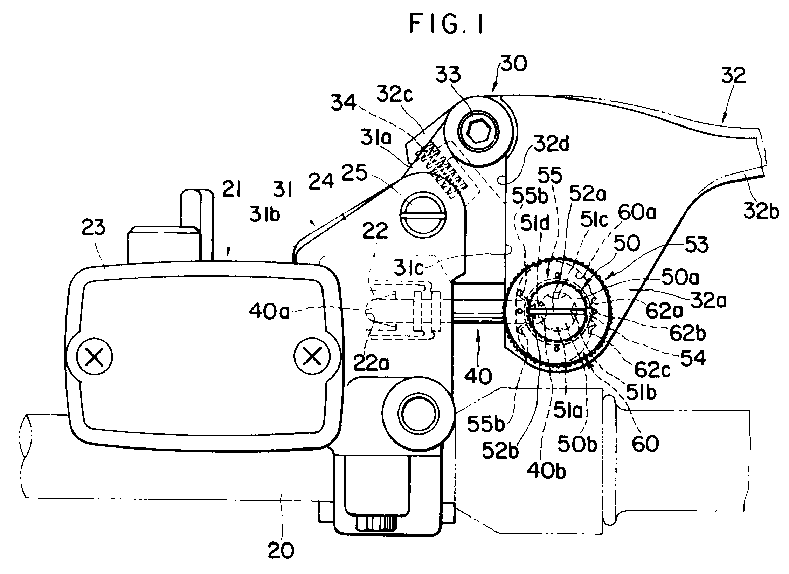

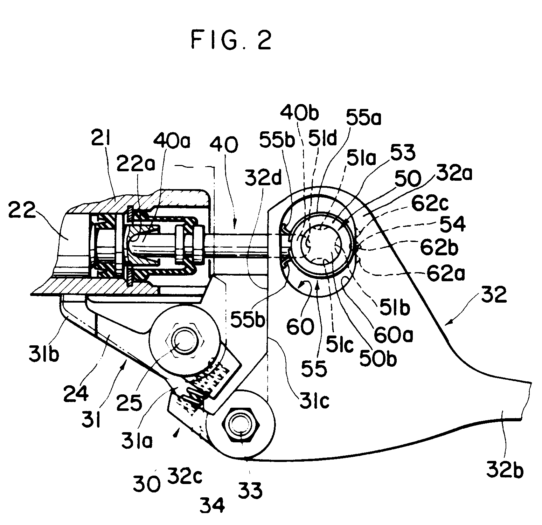

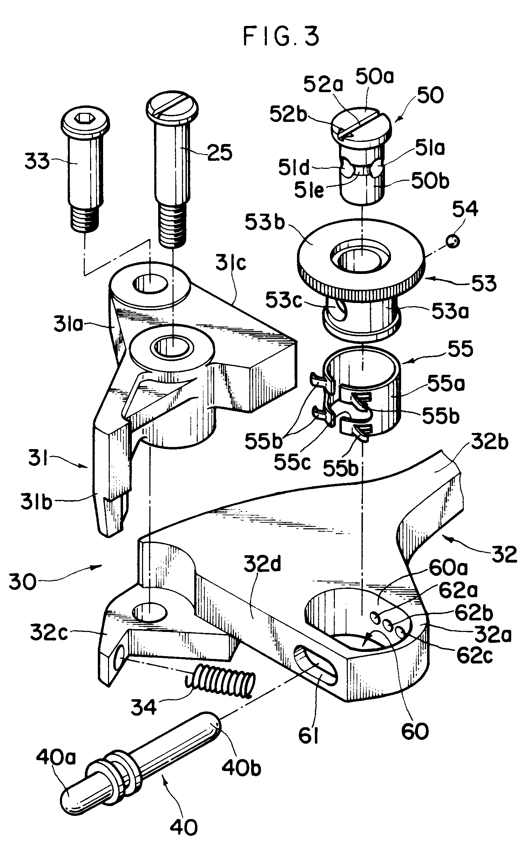

Figs. 1 to 6 illustrate the first embodiment of the present invention.

A bar type steering handle 20 is attached with a master cylinder 21. 22 denotes the piston of the master cylinder 21. A reservoir 23 is mounted on the upper portion of the master cylinder 21. A lever bracket 24 is provided on the master cylinder 21. A support shaft 25 permits an operating lever 30 to pivot on the lever bracket 24.

The operating lever 30 includes a knuckle member 31, a lever member 32, a coupling shaft 33, and a spring 34. The knuckle member 31 is permitted to pivot on the lever bracket 24 by the support shaft 25. The lever member 32 has an urging arm 32a and a grip arm 32b. The coupling shaft 33 renders the two members 31 and 32 pivotable. The spring 34 is compressed and fitted between a bridge 31a of the knuckle member 31, which is located between the support shaft 25 and the coupling shaft 33, and a projecting portion 32c of the lever member 32. A stopper 31b formed on the knuckle member 31 abuts against the side of the master cylinder 21 to control the return position of the operating lever 30. The grip arm 32b is arranged approximately parallel to the handle 20, and the urging arm 32a is substantially perpendicular to the grip arm 32b and extends towards the handle 20. The force of the spring 34 is set smaller than that of a return spring (not shown) of the piston 22.

When the operating lever assembly 30 rotates clockwise in Fig. 1, a wall 32d of the urging arm 32a of the lever member 32 on the side of the master cylinder 21 urges a facing wall 31c of the knuckle member 31, and the operating lever 30 rotates around the support shaft 25 together with the lever member 32 and the knuckle member 31.

A push rod 40 has rounded ends 40a and 40b; the end 40a abuts against the rear end of the piston 22 in the master cylinder 21, and the other end 40b is pushed by the urging arm 32a of the operating lever 30. The rear end of the piston 22 has a concave recess 22a formed in which the end 40a of the push rod 40 is to be fitted, so that the push rod 40 is displaceable around the rear end of the piston 22.

At the end 40b of the push rod 40, an adjusting pivot block 50 is supported which adjusts the distance between the grip arm 32b of the lever member 32 and the steering handle 20. The adjusting pivot block 50 includes a head portion 50a having a circular cross section and a body portion 50b. The body portion 50b has recesses with different depths, 51a, 51b, 51c, and 51d, formed clockwise in order. Between the adjacent recesses are formed guide grooves 51e shallower than any recess. The head portion 50a has a tool-fitting groove 52a and a mark 52b formed on the top.

The adjusting pivot block 50 is held rotatable by a holder 53, which includes a cylinder portion 53a to receive the adjusting pivot block 50 and a knurl portion 53b. A through hole 53c for the push rod 40 is formed in the cylinder portion 53a on the master cylinder side, while a support hole 53d for a click ball 54 is formed in the cylinder portion 53a on the side opposite the master cylinder side.

The holder 53 is resiliently supported on the urging arm 32a by a mounting member 55. The mounting member 55 is springy, and has a grip portion 55a, in which the cylinder portion 53a of the holder 53 is fitted, and a plurality of springy pieces 55b projecting from the grip portion 55a. There is an opening portion 55c formed between the pieces 55b to pass the push rod 40 through. The grip portion 55a has a through hole 55d for the click ball 54, formed on the opposite side to the opening portion 55c.

A support hole 60 is formed in the urging arm 32a of the operating lever 30, penetrating in the axial direction of the support shaft 25. The hole 60 is wide enough to provide a springy support for the mounting member 55 in the direction where the push rod 40 pushes the piston 22, and is long enough to permit the mounting member 55 to move in the direction approximately normal to the axis of the push rod 40. A wall 60a of the opening hole 60, facing the master cylinder 21, has an arc surface with the rear end of the push rod 40 as the center. In part of the wall 32d of the urging arm 32a, a push rod through hole 61 is formed penetrating the opening hole 60.

In the opposite wall 60a are formed three conical holding portions 62a, 62b, and 62c where the click ball 54 is retained. The holding portions 62a, 62b and 62c are arranged at different distances from the support shaft 25.

The holder 53, which holds the adjusting pivot block rotatable, and the click ball 54 are assembled in the mounting member 55. This assembly is inserted into the opening hole 60. The end 40b of the push rod 40 fitted into the through hole 61 is put through the opening portion 55c of the mounting member 55 and the through hole 53c of the holder 53 to come in engagement with one of the recesses of the adjusting pivot block 50, for example, with the deepest recess 51d. The click ball 54 engages with one of the holding portions, the center one 62b, for example. The mounting member 55 is supported springy in the opening hole 60 by its springy pieces 55b. The end 40b of the push rod 40 is, therefore, held at the mentioned holding portion via the aforementioned assembly including the adjusting pivot block 50.

With the use of the thus structured master cylinder for vehicles, as the operating lever 30 rotates clockwise in Fig. 1, the urging arm 32a drives the piston 22 through the push rod 40, and generates a liquid pressure in the master cylinder 21.

The adjusting mechanism for adjusting the gap between the grip arm 32b and the steering handle 20 will now be described. First, the lever member 32 slightly pivots counterclockwise in Fig. 1 around the coupling shaft 33 until the projecting portion 32c abuts against the knuckle member 31, which disengages the end 40b of the push rod 40 from the recess 51d of the adjusting pivot block 50.

As the adjusting pivot block 50 rotates in this state to select one recess and the lever member 32 is released by the force of the spring 34, the end 40b of the push rod 40 is fitted into the selected recess. Since the individual recesses have different depths, the distance between the grip arm 32b and the steering handle 20 can be adjusted according to the depth of the selected recess, without changing the stroke of the piston 22.

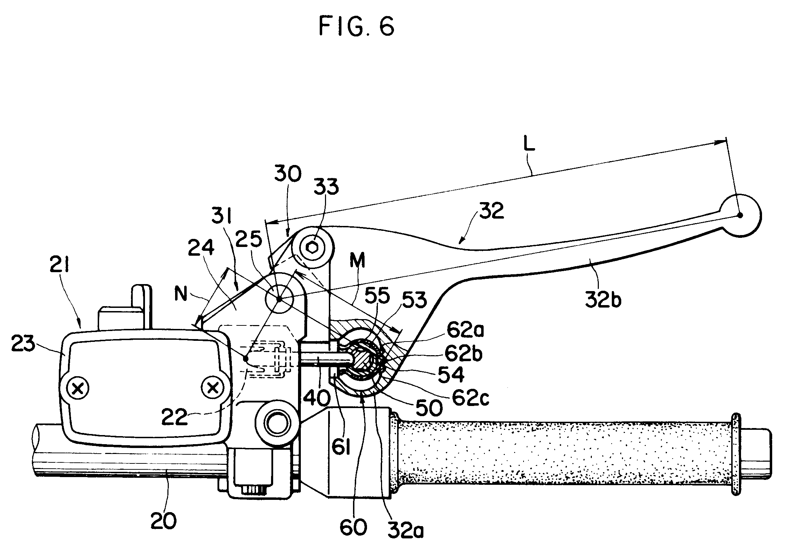

The following describes how to change the lever ratio of the operating lever. As shown in Fig. 6, the lever ratio is determined by three factors, L, M and N: L is the distance between the support shaft 25, as a pivoting point of the operating lever 30, and the end portion of the grip arm 32b, M is the distance between the shaft 25 and the holding portion as a push rod urging point of the urging arm 32a, and N is the distance between the shaft 25 and the rear end of the piston 22. Of the three factors, L and N are constant, and N does not particularly contribute to alteration of the operational feeling to which the present invention is directed. The lever ratio (M/L) can therefore be varied by changing the distance M.

When the knurl portion 53b of the holder 53 is pushed toward the master cylinder 21 against the spring force of the pieces 55b of the mounting member 55, the aforementioned assembly including the adjusting pivot block 50, and the push rod 40 move toward the master cylinder 21 to disengage the click ball 54 from the holding part 62b.

In this state, the assembly is moved in the lengthwise direction of the support hole 60 to set the click ball 54 in engagement with another selected holding portion.

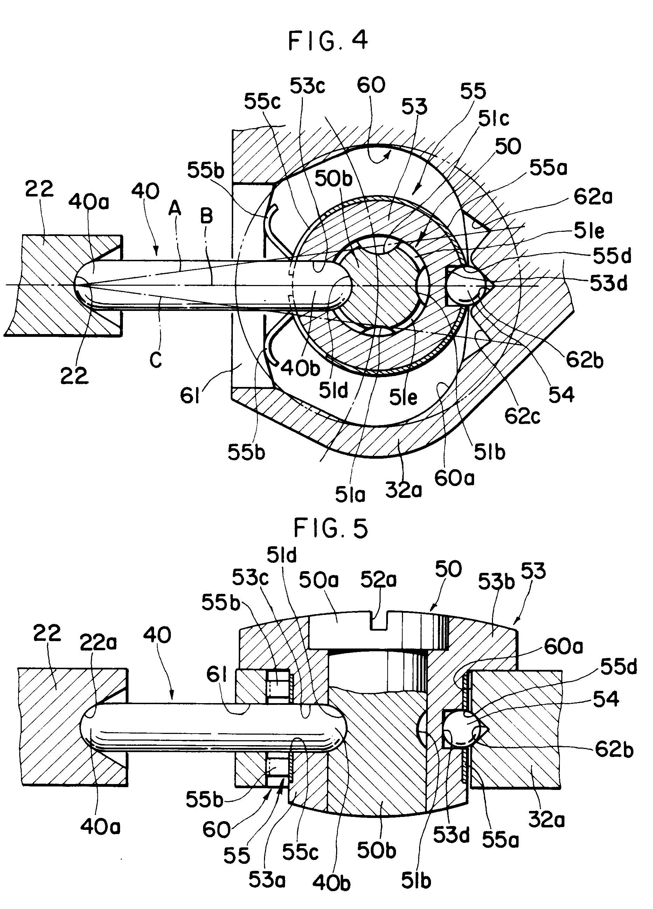

The push rod 40, as shown in Fig. 4, is movable to three positions A, B and C. At position A, the distance M is the shortest with the click ball 54 engaging with the holding portion 62a. At position C, the distance M is the longest with the click ball 54 in engagement with the holding portion 62c. At position B, the distance M is between the former two distances, with the click ball 54 engaging with the holding portion 62b.

As described above, changing the position to hold the push rod alters the reactive force of the piston at the time the liquid pressure to be transmitted to the grip portion of the operating lever 30 is generated, without changing the stroke of the piston 22. Therefore, the operational feeling can be adjusted as desired by a rider.

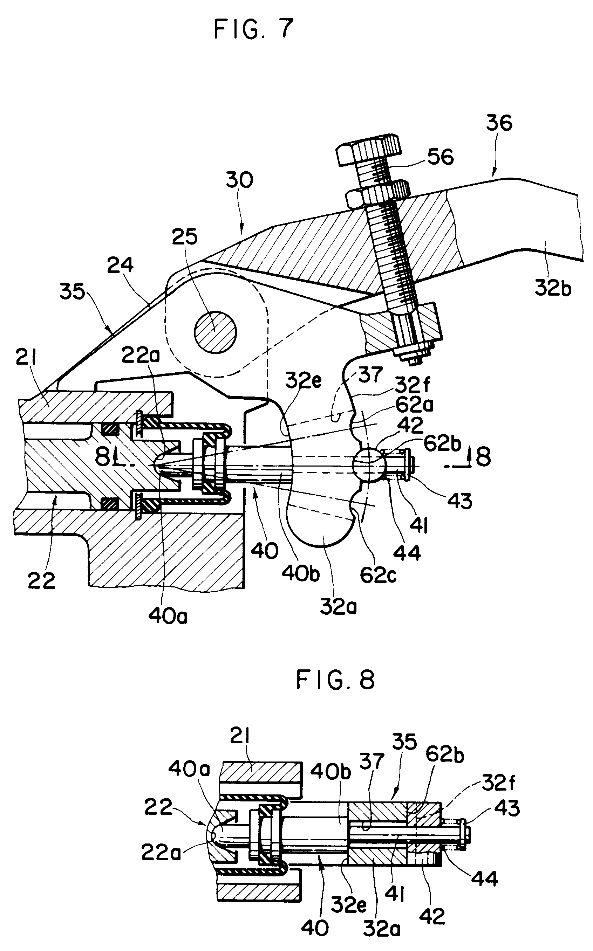

Figs. 7 and 8 illustrate a second embodiment of the present invention.

The operating lever 30 used in the second embodiment includes an urging member 35 with the urging arm 32a and a grip member 36 with the grip arm 32b. Both members 35 and 36 are coupled by means of the support shaft 25, and are pivoted on the lever bracket 24. An adjusting bolt 56 for adjusting the distance between the grip member 36 and the steering handle 20 is screwed into the grip member 36. The free end of the adjusting bolt 56 is connected to the urging member 35.

In adjusting the distance between the grip arm 32b and the steering handle 20, as driving in the adjusting bolt 56 rotates the grip member 36 around the support shaft 25, this distance can be adjusted without changing the stroke of the piston 22 of the master cylinder 21.

One spherical end 40a of the push rod 40 is engaged with the concave recess 22a at the rear end of the piston 22, so that the push rod 40 can be move around the rear end of the piston 22. A small-diameter shaft 41 extends from the other end 40b of the push rod 40. An engaging member 42 is fitted over the small-diameter shaft 41. A stopper ring 43 is secured to the rear end of the small-diameter shaft 41. A spring 44 is compressed between the stopper ring 43 and the engaging member 42.

A wall 32e of the urging arm 32a on the master cylinder side and a wall 32f on the side opposite to the master cylinder side have an arc surface with the rear end of the piston 22 as the center. A through hole 37 is bored in the urging arm 32a, penetrating from the wall 32e to the wall 32f. The other end 40b of the push rod 40 abuts on the wall 32e to receive urging force.

Holding portions 62a, 62b and 62c having a groove shape are formed in the wall 32f of the urging arm 32a at different distances from the support shaft 25. The engaging member 42 is engaged with one of the holding portions, for example, the center one 62b, by the force of the spring 44. Therefore, the push rod 40 is held at the holding portion by its end 40b and the engaging member 42.

In changing the lever ratio of this operating lever, first, the engaging member 42 is pulled toward the stopper ring 43 against the force of the spring 44 to disengage the engaging member 42 from the holding portion 62b. Then, the engaging member 42 is moved along the wall 32f to come in engagement with another holding portion selected.

As a result, the distance between the push rod urging point and the support shaft 25 changes, thus ensuring alteration of the lever ratio without varying the stroke of the piston 22.

Although the holding portions 62a, 62b and 62c are arranged along the circumference with the rear end of the piston as the center, they may be arranged linearly. In this case, changing the lever ratio would also alter the distance between the grip arm and the steering handle, but this distance needs to be properly set again after the lever ratio is changed.

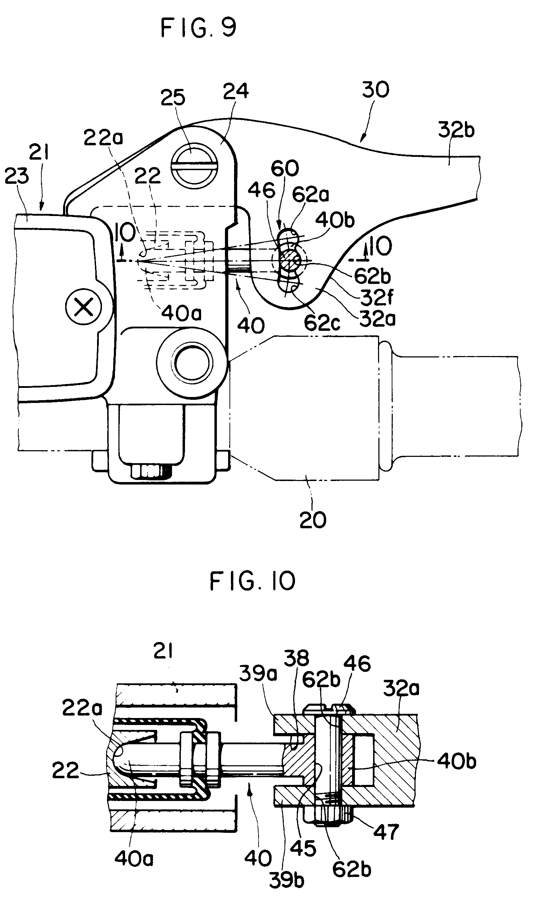

Figs. 9 and 10 illustrate a third embodiment of the present invention.

The operating lever 30 used in this embodiment has the urging arm 32a and the grip arm 32b formed integral. The operating lever 30 is pivoted on the lever bracket 24 of the master cylinder 21 by means of the support shaft 25, and permits the urging arm 32a to urge the piston 22 of the master cylinder 21 via the push rod 40.

One spherical end 40a of the push rod 40 is engaged with the concave recess 22a at the rear end of the piston 22, so that the push rod 40 can be move around the rear end of the piston 22. The other end 40b of the push rod 40 has a bolt through hole 45 formed therein in the axial direction of the support shaft 25.

The urging arm 32a has a groove 38 formed therein in which the end 40b of the push rod 40 is guided. The holding portions 62a, 62b and 62c are formed in an upper plate 39a and a lower plate 39b of the groove 38, penetrating therethrough, at different distances from the support shaft 25. Adjoining holding portions are continual to form a support hole 60.

The end 40b of the push rod 40 which is guided in the groove 38 is engaged with any of the holding portions, for example, the middle one 62b, and held there, by means of a bolt 46 fitted through the bolt through hole 45 and a nut 47 to be fitted over the bolt 46.

In changing the lever ratio of the operating lever, first, detach the nut 47 from the bolt 46, pull out the bolt 46, then displace the push rod 40 to set the bolt through hole 45 of the end 40b of the push rod 40 in association with another selected holding portion, finally secure the assembly by means of the bolt 46 and the nut 47.

With the above arrangement, the distance between the push rod urging point and the support shaft 25 changes, thus ensuring alteration of the lever ratio without altering the stroke of the piston 22.

It should be noted that the holding portions and the push rod, and the structure for the latter with the former as illustrated in the secondembodiment can also apply to the third embodiment. The holding portions and the push rod, and the structure for the latter with the former as illustrated in the third embodiment can apply to the second embodiment.

## Claims

1. An operating lever ratio adjusting apparatus for a master cylinder for vehicles including a master cylinder (21) attached to a bar type steering handle (20), a lever bracket (24) provided at said master cylinder (21), an operating lever (30) pivotable on said lever bracket (24) by a support shaft (25), a push rod (40) having a first end (40a) acting on a rear end of a piston (22) in said master cylinder (21) and a second end (40b) pushed by an urging arm (32a) of said operating lever (30), the urging arm (32a) having a plurality of holding portions (62a,62b,62c), for holding the second end (40b) of the push rod (40), characterised in that said holding portions are arranged such that the position of the second end (40b) of the push rod (40) is variable in a direction which crosses the axis of the push rod (40), thereby varying the distance between the support shaft (25) and the second end (40b) of the push rod (40).

2. An operating lever ratio adjusting apparatus according to claim 1 wherein said operating lever (30) includes a knuckle member (31) pivotable on said lever bracket (24) by said support shaft (25), a lever member (32) having said urging arm (32a) and a grip arm (32b), a coupling shaft (33) for permitting said knuckle member (31) and said lever member (32) to be pivotable, and a spring (34) compressed between a bridge (31a) of said knuckle member (31), lying between said support shaft (25) and said coupling shaft (33), and a projecting portion (32c) of said lever member (32), said holding portions (62a,62b,62c) being arranged to support an adjusting pivot block (50) for adjusting the distance between said lever member (32) and said steering handle (20), said portions being formed on said urging arm (32a) at different distances from said support shaft (25).

3. An operating lever ratio adjusting apparatus as claimed in claim 1, wherein said operating lever (30) includes an urging member (35) having an urging arm (32a) to be connected to said support shaft (25) and a grip member (36) having a grip arm (32b), said plurality of holding portions (62a,62b,62c) being arranged to permit an adjusting bolt (56) for adjusting a distance between said grip member (36) and said operating lever (20) to be engaged with said grip member (36), coupling a distal end of said adjusting bolt (56) to said urging member (35), and holding said other end (40b) of said push rod (40) at said urging arm (32a), said holding portions (62a,62b,62c) being formed on said urging arm (32a) at different distances from said support shaft (25).

4. An operating lever ratio adjusting apparatus according to any preceding claim, wherein said holding portions (62a,62b,62c) are formed on an inner wall (60a) of a support hole (60) formed in said urging arm (32a).

5. An operating lever ratio adjusting apparatus according to claim 1 or 3, wherein said holding portions (62a,62b,62c) are formed on a wall of said urging arm (32a) on a side opposite to said master cylinder.

## Patentansprüche

1. Verhältniseinstellvorrichtung des Betätigungshebels für einen Hauptzylinder für Fahrzeuge, umfassend: einen Hauptzylinder (21), der an einem stangenartigen Lenkergriff (20) angebracht ist, eine Hebellasche (24), die an dem Hauptzylinder (21) vorgesehen ist, einen Betätigungshebel (30), der an der Hebellasche (24) durch eine Tragwelle (25) schwenkbar ist, eine Druckstange (40), deren erstes Ende (40a) auf ein Hinterende eines Kolbens (22) in dem Hauptzylinder (21) wirkt und deren zweites Ende (40b) durch einen Druckarm (32a) des Betätigungshebels (30) gedrückt ist, wobei der Druckarm (32a) eine Mehrzahl von Halteabschnitten (62a, 62b, 62c) zum Halten des zweiten Endes (40b) der Druckstange (40) aufweist,
**dadurch gekennzeichnet**,
daß die Halteabschnitte derart angeordnet sind, daß die Stellung des zweiten Endes (40b) der Druckstange (40) in einer Richtung veränderlich ist, die die Achse der Druckstange (40) kreuzt, wodurch sich der Abstand zwischen der Tragwelle (25) und dem zweiten Ende (40b) der Druckstange (40) ändert.

2. Verhältniseinstellvorrichtung des Betätigungshebels nach Anspruch 1, in der der Betätigungshebel (30) umfaßt: ein Gelenkteil (31), das an der Hebellasche (24) durch die Tragwelle (25) schwenkbar ist, ein Hebelteil (32) mit dem Druckarm (32a) und einem Griffarm (32b), eine Kopplungswelle (33), durch die ein Verschwenken des Gelenkteils (31) und des Hebelteils (32) möglich ist, und eine Feder (34), die zwischen einer Brücke (31a) des Gelenkteils (31), die zwischen der Tragwelle (25) und der Kopplungswelle (33) liegt, und einem vorstehenden Abschnitt (32c) des Hebelteils (32) komprimiert ist, wobei die Halteabschnitte (62a, 62b, 62c) zum Halten eines Einstellschwenkblocks (50) zum Einstellen des Abstands zwischen dem Hebelteil (32) und dem Lenkergriff (20) angeordnet sind, welche Abschnitte an dem Druckarm (32a) mit verschiedenen Abständen von der Tragwelle (25) geformt sind.

3. Verhältniseinstellvorrichtung des Betätigungshebels nach Anspruch 1, in der der Betätigungshebel (30) umfaßt: ein Druckteil (35) mit einem Druckarm (32a) zum Anschluß an die Tragwelle (25) und einen Griffteil (36) mit einem Griffarm (32b), wobei die Mehrzahl von Halteabschnitten (62a, 62b, 62c) so angeordnet ist, daß ein Einstellbolzen (56) einen Abstand zwischen dem Griffteil (36) und dem Betätigungshebel (20) zum Eingriff mit dem Griffteil (36) einstellen, ein distales Ende des Einstellbolzens (56) mit dem Druckteil (35) koppeln und das andere Ende (40b) der Druckstange (40) an dem Druckarm (32a) halten kann, wobei die Halteabschnitte (62a, 62b, 62c) an dem Druckarm (32a) mit verschiedenen Abständen von der Tragwelle (25) geformt sind.

4. Verhältniseinstellvorrichtung des Betätigungshebels nach einem der vorhergehenden Ansprüche, in dem die Halteabschnitte (62a, 62b, 62c) an einer Innenwand (60a) eines in dem Druckarm (32a) geformten Traglochs (60) geformt sind.

5. Verhältniseinstellvorrichtung des Betätigungshebels nach Anspruch 1 oder 3, in der die Halteabschnitte (62a, 62b, 62c) an einer dem Hauptzylinder gegenüberliegenden Wand des Druckarms (32a) geformt sind.

## Revendications

1. Dispositif de réglage du rapport d'un levier de commande d'un maître cylindre pour des véhicules comportant un maître cylindre (21) fixé sur une poignée de direction (20) du type formant barre, un support de levier (24) disposé sur le maître cylindre (21), un levier de commande (30) monté pivotant sur le support de levier (24) autour d'un arbre de support (25), une tige de poussée (40) comportant une première extrémité (40a) agissant sur une extrémité arrière d'un piston (22) dans le maître cylindre (21) et une seconde extrémité (40b) poussée par un bras pousseur (32a) du levier-de commande (30), le bras pousseur (32a) comportant une pluralité de parties de maintien (62a,62b,62c), pour maintenir la seconde extrémité (40b) de la tige de poussée (40), caractérisé en ce que les parties de maintien sont agencées de telle manière que la position de la seconde extrémité (40b) de la tige de poussée (40) est variable dans une direction qui croise l'axe de la tige de poussée (40), de façon à faire varier la distance entre l'arbre de support (25) et la seconde extrémité (40b) de la tige de poussée (40).

2. Dispositif de réglage du rapport d'un levier de commande selon la revendication 1, dans lequel le levier de commande (30) comporte un organe d'articulation (31) monté pivotant sur le support de levier (24) autour de l'arbre de support (25), un organe de levier (32) comportant le bras pousseur (32a) et un bras de saisie (32b), un arbre d'accouplement (33) permettant le pivotement de l'organe d'articulation (31) et de l'organe de levier (32), et un ressort (34) comprimé entre une partie de liaison (31a) de l'organe d'articulation (31), s'étendant entre l'arbre de support (25) et l'arbre d'accouplement (33), et une partie (32c) en saillie de l'organe de levier (32), les parties de maintien (62a,62b,62c) étant agencées pour porter un bloc pivot de réglage (50) pour régler la distance entre l'organe de levier (32) et la poignée de direction (20), ces parties étant formées dans le bras pousseur (32a) à des distances différentes de l'arbre de support (25).

3. Dispositif de réglage du rapport d'un levier de commande selon la revendication 1, dans lequel le levier de commande (30) comporte un organe pousseur (35) comportant un bras pousseur (32a) destiné à être relié à l'arbre de support (25) et un organe de saisie (36) comportant un bras de saisie (32b), la pluralité de parties de maintien (62a,62b,62c) étant agencée pour permettre à un boulon de réglage (56) pour régler la distance entre l'organe de saisie (36) et le levier de commande (20) de coopérer avec l'organe de saisie (36), d'accoupler une extrémité distale du boulon de réglage (56) à l'organe pousseur (35), et de maintenir l'autre extrémité (40b) de la tige de poussée (40) sur le bras pousseur (32a), les parties de maintien (62a,62b,62c) étant formées dans le bras pousseur (32a) à des distances différentes de l'arbre support (25).

4. Dispositif de réglage du rapport d'un levier de commande selon l'une quelconque des revendications précédentes, dans lequel les parties de maintien (62a, 62b,62c) sont formées dans une paroi intérieure (60a) d'un trou de support (60) formé dans le bras pousseur (32a).

5. Dispositif de réglage du rapport d'un levier de commande selon la revendication 1 ou 3, dans lequel les parties de maintien (62a,62b,62c) sont formées sur une paroi du bras pousseur (32a) sur un côté opposé au maître cylindre.
